# EUROPEAN PATENT SPECIFICATION

(11) **EP 4 806 970 B1**
(45) Date of publication and mention of the grant of the patent: **25.11.2026**
(21) Application number: 25163357.4
(22) Date of filing: 12.03.2025
(51) Int. Cl.: C09J 163/00, C08G 59/40

(54) **ADHESIVE**
KLEBSTOFF
ADHÉSIF

(43) Date of publication of application: 16.09.2026
(73) Proprietor: Lohmann GmbH & Co. KG, 56567 Neuwied (DE)
(72) Inventor: Wegner, Tobias, 56237 Wittgert (DE)

(56) References cited:
- CN-A- 117 801 742
- CN-A- 118 638 501
- US-A1- 2023 203 239

## Description

Adhesives which do not require solvents to be coated onto a substrate and polymerized to form a pressure-sensitive adhesive film have the advantages of both being able to produce films with a thickness of over 200 µm and having a lower environmental impact. Solvent-based pressure-sensitive adhesive films are limited to a thickness of at most 200 µm to prevent the formation of bubbles during the drying step.

Adhesives which can be polymerized using heat and cured using UV radiation have the advantages of not requiring any cooling to store the polymerized adhesive film and allowing for the bonding of heat-sensitive components, such as electronics. If both the polymerization reaction and the curing reaction use heat, the polymerization temperature and the curing temperature must be far enough apart to prevent accidental curing, which greatly limits the selection of suitable polymerization agents and curing agents.

CN 118638501 A discloses the usage of both a cationic initiator and a thermal initiator in an adhesive. The adhesive is cured in a single heating step, in which the two types of initiators are both activated to achieve rapid curing.

It is an object of this invention to provide an adhesive which can be coated without the usage of solvents, polymerized using heat and cured using UV radiation. This object is achieved by the features of claims 1, while other embodiments and improvements of the invention may be taken from the dependent claims.

In the following, the terms "curing" and "polymerization" are used. "Polymerization" refers to the process of linking adhesive monomers to form a multitude of polymers. "Curing" is to be understood as the process of interconnecting the polymers to create a semi-cured or fully cured polymer network. "Crosslinking" is a term that is often used and essentially means the same as curing.

In the following, any weight percentage mentioned always relates to the entire adhesive without fillers, unless specified otherwise. Fillers are to be understood as any substances which do not take part in the polymerization reaction or curing reaction and are added to the adhesive in a minimum amount of 20 wt%, preferably 30 wt%, especially preferably 40 wt% per type of filler, this weight percentage referring to the entire adhesive. Fillers may be configured to adjust a volume, an electrical conductivity, a thermal conductivity and/or flame-retardancy of the adhesive. Fillers may have any size or shape. For example, fillers may be spherical, oval, amorphous, flake-shaped, plate-shaped, tube-shaped and/or fibrous. Fillers may comprise any type of material. For example, fillers may comprise at least one metal, plastic, ceramic, carbon and/or glass. Fillers may comprise a single material. Alternatively, fillers may comprise multiple different materials, preferably a core material and a coating material. Examples of substances which may be used as fillers can be found among foaming agents, electrically conductive particles, electrically insulating particles, thermally conductive particles, thermally insulating particles, flame-retardant particles and intumescent particles. Sheets and foils onto which the adhesive can be coated and which also provide conductive or insulating properties, such as metal foils, are not fillers in the context of this invention.

In one embodiment of the invention, an adhesive is proposed, the adhesive comprising: at least one adhesive monomer wherein the adhesive monomer comprises at least one hydroxy group in a non-polymerized state,
at least one polymerization agent which is heat-activatable,
at least one polymerization accelerator, and
at least one curing agent which is UV-activatable,
wherein the polymerization agent comprises at least one cyclic anhydride group in the non-polymerized state and wherein a weight percentage of the curing agent is 10 - 50 times, preferably 20 - 40 times and especially preferably 25 - 35 times a weight percentage of the polymerization accelerator, the weight percentages relating to the entire adhesive without fillers.

Whenever an object which has been introduced with "at least one" is referred to using "the object", it is to be understood as meaning "the object if there is only one or the objects if there are multiple".

The adhesive may be present in the non-polymerized state, a polymerized state, a non-cured state or a cured state. Preferably, the adhesive in the non-polymerized state is an adhesive mass. The adhesive mass may be formed by mixing the components together without the usage of solvents. Mixing of the components may be conducted using any suitable container, for example a mixing tank. Preferably, the adhesive in the polymerized state is a pressure-sensitive adhesive film. The pressure-sensitive adhesive film may be formed by coating the adhesive mass onto a substrate without the usage of solvents and heating the coated adhesive mass until it is fully polymerized. Preferably, the adhesive in the cured state is a non-tacky layer without any adhesive surfaces. The firm layer may be formed by irradiating the pressure-sensitive adhesive film with UV radiation, preferably UVA radiation, until it is fully cured.

The adhesive in the polymerized state may be part of a pressure-sensitive adhesive tape, such as a single-sided pressure-sensitive adhesive tape, a double-sided pressure-sensitive adhesive tape or a pressure-sensitive transfer tape. The pressure-sensitive adhesive tape may be provided in form of a flat pressure-sensitive adhesive sheet. The pressure-sensitive adhesive sheet may may have any size or shape. The pressure-sensitive adhesive sheet may be cut out of a larger pressure-sensitive adhesive web using any suitable cutting method, such as a die-cutting method for example. Alternatively, the pressure-sensitive adhesive tape may be provided as part of a wound pressure-sensitive adhesive tape roll. The pressure-sensitive adhesive tape may comprise a carrier layer, one or two release liners and/or any other additional layers. The additional layers may be further adhesive layers or other functional layers such as foam layers or insulation layers.

An adhesive monomer is to be understood as a substance configured to take part in the polymerization reaction and the curing reaction and comprising at least one functional group. Examples of functional groups for adhesive monomers include acrylic groups, methacrylic groups, urethane groups, epoxy groups, siloxane groups, isoprene groups and styrene groups. The adhesive may comprise any number of different adhesive monomers, preferably, the adhesive comprises either a single adhesive monomer or two different adhesive monomers. The adhesive may comprise adhesive monomers with different functional groups, preferably, the adhesive only comprises adhesive monomers with the same functional groups. Preferably, the functional group of a first part of the adhesive monomers takes part in the polymerization reaction, while the functional group of a second part of the adhesive monomers takes part in the curing reaction. Alternatively, the adhesive monomers may comprise a first functional group and a second functional group, wherein the first functional group takes part in the polymerization reaction and the second functional group takes part in the curing reaction. The adhesive may comprise adhesive monomers with functional groups having a ring structure, in particular an aromatic structure, a cyclo-aliphatic structure and/or any other molecular structure. The adhesive may comprise adhesive monomers with the same or different numbers of hydroxy groups in the non-polymerized state.

The adhesive may comprise adhesive monomers with any number of molecular subunits. Substances with multiple molecular subunits are commonly referred to as 'oligomers'.

The biggest challenge in creating a functional adhesive composition which polymerizes with heat and cures with UV light lies in preventing the substances taking part in the polymerization reaction from interfering with the substances taking part in the curing reaction, and vice versa.

A polymerization reaction in the context of this invention is to be understood as a chemical reaction in which, upon reaching the polymerization temperature, the polymerization agent reacts with the adhesive monomer to form UV-curable polymers. A cyclic anhydride group is to be understood as a molecular structure including at least one, preferably exactly one, aromatic ring in which two acyl groups are bonded to the same oxygen atom. The polymerization agent may be an anhydride of any organic acid, for example, the polymerization agent may be an anhydride of phthalic acid, trimellitic acid or fumaric acid. Examples of polymerization agents include 1,3-Isobenzofurandione, 1,2,3,6-tetrahydro-3-methylphthalic anhydride, 1,3-Dihydro-1,3-dioxo-5-isobenzofurancarboxylic acid and Methyl-5-norbornene-2,3-dicarboxylic anhydride.

Preferably, the polymerization agent does not comprise any thiol groups or amine groups. Tests to find polymerization agents which do not inhibit the curing reaction quickly led to the realization that polymerization agents comprising thiol groups or amine groups neutralize the acid and/or radicals created by the curing agent due to their high basicity, thereby inhibiting the curing reaction. Further tests were conducted using polymerization agents comprising anhydride groups, as they are less basic. However, by themselves, they have polymerization temperatures of 160°C and above, which would cause decay of the curing agent and also inhibit the curing reaction.

A polymerization accelerator in the context of this invention is to be understood as a substance configured to influence the polarity of the adhesive monomer and/or the polymerization agent in a way that reduces the polymerization temperature. The polymerization accelerator may also reduce an amount of polymerization agent required to initiate the polymerization reaction. Preferably, the polymerization reaction comprises a first sub reaction in which the polymerization accelerator reacts with the hydroxy group of the adhesive monomer to form an intermediate structure. Preferably, the polymerization reaction comprises a second sub reaction in which the intermediate structure reacts with the cyclic anhydride group of the polymerization agent, opening a ring structure of the cyclic anhydride group. Preferably, the polymerization reaction comprises a third sub reaction in which the opened cyclic anhydride group reacts with the functional group of the adhesive monomer to create the UV-curable polymers. The adhesive may comprise any number of different polymerization accelerators, preferably, the adhesive comprises a single polymerization accelerator. Preferably, the polymerization accelerator is a nucleophile. The polymerization accelerator may be any type of nucleophile, such as a hydroxy-group-containing nucleophile, an aromatic nucleophile, a halogen-containing nucleophile and/or a phosphor-containing nucleophile for example. The polymerization accelerator may comprise at least one alcohol group, in particular a benzyl group, and/or at least one carboxylic acid group.

Adding polymerization accelerators and thereby reducing the polymerization temperature prevents the decay of the curing agent during the polymerization reaction. However, tests with different polymerization accelerators led to the result that they are also too basic and neutralize the acid and/or radicals. Additionally, the reduction of the polymerization temperature was not great enough to guarantee that there will be no decay of the curing agent. Attempts to solve this issue led to two unexpected realizations. Firstly, using specifically adhesive monomers with hydroxy groups increases the reduction of the polymerization temperature. This is because, surprisingly, polymerization reactions in which the polymerization accelerator directly reacts with the cyclic anhydride group to open it require a higher temperature than polymerization reactions in which the polymerization accelerator reacts with the hydroxy group first. Secondly, while the decay of the curing agent can only be prevented by staying under a certain temperature, the neutralization of the acid and/or radicals can be influenced by adjusting the weight percentages of the adhesive. Adding an amount of curing agent which is much higher than what is needed to achieve the curing reaction surprisingly does not inhibit the polymerization reaction, while allowing for the curing reaction to take place despite the presence of the polymerization accelerator. This is why only this specific combination of adhesive monomer, polymerization agent, polymerization accelerator and curing agent is able to produce an adhesive which can undergo both the polymerization reaction and the curing reaction.

A curing reaction in the context of this invention is to be understood as a chemical reaction in which the curing agent, upon being exposed to UV light, reacts with at least the functional group of the adhesive monomer to form a polymer network. The curing reaction is irreversible. Preferably, the curing agent comprises at least one, especially preferably exactly one, curing group which reacts with at least the functional group of the adhesive monomer in the curing reaction. The UV light may comprise UV A light, UVB light and/or UVC light. The curing agent may be a radical photoinitiator configured to split into radicals upon being exposed to the UV light. Examples for radical curing agents are Norrish Type I photoinitiators and Norrish Type II photoinitiators, which may be found among azo derivates, anthraquinones, xanthones, thioxanthones, benzosuberones, dicarbonyls, acridones, benziles, ketocoumarins or camphorquinones. Preferably, the curing agent is a cationic curing agent configured to generate acids upon being exposed to the UV light. Examples for cationic curing agents may be found among onium salts, such as aryldiazonium salts, diaryliodonium salts, triaryl sulfonium salts and sulfonium hexafluoroantimonate salts.

In a further embodiment of the invention, the adhesive has a viscosity of 1 - 30 Pas, preferably 1,5 - 20 Pas, especially preferably 2 - 10 Pas, in the non-polymerized state. This viscosity prevents a clogging of the device used for coating of the adhesive mass, which may be a blade coating device, a curtain coating device or any other type of coating device known from the state of the art. This viscosity further prevents a deformation of the coated adhesive mass, which may lead to uneven thickness of the pressure-sensitive adhesive film after the polymerization is finished. The viscosity is to be measured using a rotational viscometer. Samples for the viscosity measurement are to be prepared by mixing the components of the adhesive in a beaker, thereby forming the adhesive mass, and inserting the spindle of the rotational viscometer into the adhesive mass. In the context of this invention, a Brookfield DVNXLV viscometer with a 63 LV spindle and rotational speeds of 12 - 30 rpm has been used.

In a further embodiment of the invention, the adhesive has a polymerization temperature of 120 - 150°C, preferably 130 - 140°C. This polymerization temperature allows for the usage of curing agents without the risk of them decaying due to the heat. The polymerization temperature is to be measured using a heat-flux differential scanning calorimeter (DSC). Samples for the heat-flux DSC are to be prepared by mixing the components of the adhesive and pouring the adhesive mass into the sample pan of the heat-flux DSC. In the context of this invention, a Netzsch DSC 300 Caliris Classic heat-flux DSC has been used at a heating rate of 1 K/min. The reference pan was left empty, thereby using air as the reference.

In a further embodiment of the invention, the adhesive has a tensile lap-shear strength of 0,05 - 1 MPa, preferably 0,1 - 0,9 MPa, especially preferably 0,2 - 0,8 MPa, in the polymerized state. A tensile lap-shear strength is to be understood as the force necessary to debond two bonding partners which are fixed relative to each other via overlapping surfaces of the bonding partners onto which the adhesive film to be tested is applied, the force being applied by pulling at opposite ends of the bonding partners at a 180° angle. This tensile lap-shear strength allows for the pressure-sensitive adhesive film to establish reversible adhesive bonds which do not leave residue on surfaces after debonding. The tensile lap-shear strength is to be measured using a universal testing machine (UTM). Samples for the UTM are to be prepared by cleaning two identical strips of fiberglass composite with isopropanol, the strips measuring 25 mm in width. The components of the adhesive are mixed and coated onto a siliconized PET substrate, after which they are placed in a drying oven set to 130°C for 15 minutes to fully polymerize. Depending on the specific composition of the adhesive, the temperature and duration of the heating required to achieve full polymerization may differ. The resulting pressure-sensitive adhesive film is applied on one of the strips, the siliconized PET substrate is removed and the two strips are placed on top of each other so that a bonded surface of 25 mm width and 12,5 mm length is created. The finished sample is then placed in the UTM for testing. In the context of this invention, a ZwickRoell zwickiLine Z0.5 TH has been used.

In a further embodiment of the invention, the adhesive has a tensile lap-shear strength of 1 - 30 MPa, preferably 5 - 25 MPa, especially preferably 10 - 20 MPa, in the cured state. This tensile lap-shear strength guarantees that the firm film cannot establish any new adhesive bonds while providing a strong adhesive bond for bonding partners onto which the pressure-sensitive adhesive was applied. Samples for the UTM are provided the same way as for the tensile lap-shear strength in the polymerized state, with the addition of the pressure-sensitive adhesive film being irradiated with UV A light for 10 - 60 seconds with an intensity of 50 - 2000 mW/cm2 before application and the bonded strips being stored for 8 - 48 hours to achieve full curing before placing the sample in the UTM for testing. Depending on the specific composition of the adhesive, the type and intensity of UV light and storage time required to achieve full curing may differ. The pressure-sensitive adhesive film was manufactured by mixing the components of the adhesive, coating them onto a siliconized PET substrate and then putting the substrate and the coated components into a drying oven set to 130°C for 15 minutes.

All measurements are to be performed at 25°C and 50 %RH.

In a further embodiment of the invention, the adhesive monomer comprises at least one epoxy group in the non-cured state. Preferably, the epoxy group is the functional group of the adhesive monomer. The adhesive may also comprise adhesive monomers which do not comprise any epoxy groups in the non-cured state. Preferably, the adhesive only comprises adhesive monomers with at least one epoxy group in the non-cured state. The adhesive monomer may comprise any type of epoxy groups, such as aliphatic epoxy groups and/or aromatic epoxy groups. Examples for adhesive monomers comprising aliphatic epoxy groups can be found among epoxidized vegetable oils and glycidyl epoxy resins. Examples for adhesive monomers comprising aromatic epoxy groups can be found among novolak-based epoxy resins and bisphenol-based epoxy resins.

In a further embodiment of the invention, the polymerization accelerator comprises at least one amine group in the non-polymerized state. The polymerization accelerator may comprise at least one primary amine group and/or at least one secondary amine group in the non-polymerized state. Preferably, the polymerization accelerator comprises at least one tertiary amine group in the non-polymerized state. The polymerization accelerator may comprise at least one aromatic amine group in the non-polymerized state. Preferably, the polymerization accelerator comprises at least one heterocyclic amine group in the non-polymerized state. Examples for commonly used polymerization accelerators with amine groups can be found among tertiary amines, imidazoles and ureas. Using polymerization accelerators comprising amine groups allows for a greater reduction of the polymerization temperature compared to other types of polymerization accelerators, such as metallic salts for example.

In a further embodiment of the invention, the polymerization accelerator comprises at least one non-heterocyclic tertiary amine group in the non-polymerized state. An example of a non-heterocyclic tertiary amine commonly used as a polymerization accelerator is 2,4,6-tris(dimethylaminomethyl)phenol.

In a further embodiment of the invention, a weight percentage of the adhesive monomer is 0,5 - 3,5 times, preferably 1 - 2,5 times and especially preferably 1,5 - 2 times the weight percentage of the polymerization agent.

In a further embodiment of the invention, a sum of the weight percentages of the adhesive monomer and the polymerization agent is 20 - 80 wt%, preferably 30 - 70 wt%, especially preferably 40 - 60 wt%.

In a further embodiment of the invention, the adhesive comprises:
15 - 65 wt%, preferably 20 - 55 wt%, especially preferably 25 - 45 wt% of the adhesive monomer,
5 - 40 wt%, preferably 10 - 35 wt%, especially preferably 15 - 30 wt% of the polymerization agent,
2 - 8 wt%, preferably 3 - 7 wt%, especially preferably 4 - 6 wt% of the curing agent, 0,01 - 0,5 wt%, preferably 0,05 - 0,3 wt%, especially preferably 0,1 - 0,2 wt% of the polymerization accelerator and
0 - 30 wt%, preferably 1 - 20 wt%, especially preferably 2 - 10 wt% of additives.

Additives are to be understood as any substances added to the adhesive which do not take part in the polymerization reaction or curing reaction and are added to the adhesive in amounts below the minimum amount when referring to the entire adhesive. Preferably, the adhesive comprises at most 20 wt%, preferably at most 15 wt%, especially preferably at most 10 wt% per type of additive. The adhesive may comprise any number and types of additives. Additives may, for example, include film formers, antioxidants, dyes, pigments and/or photosensitizers. In cases where any of the listed types of additives are added to the adhesive in amounts which, when referring to the entire adhesive, exceed the minimum amount, they are to be categorized as fillers instead. In cases where any of the listed types of fillers are added to the adhesive in amounts which, when referring to the entire adhesive, are below the minimum amount, they are to be categorized as additives instead.

In a further embodiment of the invention, the adhesive comprises 10 - 60 wt%, preferably 15 - 50 wt%, especially preferably 20 - 40 wt% of at least one further adhesive monomer, the further adhesive monomer being free of hydroxy groups in the non-polymerized state. Preferably, the further adhesive monomer is unreacted in the polymerized state. Especially preferably, the further adhesive monomer is reacted in the cured state. The adhesive may comprise any number of different further adhesive monomers, preferably, the adhesive comprises either a single further adhesive monomer or two different further adhesive monomers. The adhesive may comprise further adhesive monomers with different functional groups, preferably, the adhesive only comprises further adhesive monomers with the same functional groups. The adhesive may comprise further adhesive monomers with functional groups having a ring structure, in particular an aromatic structure, a cyclo-aliphatic structure and/or any other molecular structure. The adhesive monomer and the further adhesive monomer may comprise different functional groups, preferably, the adhesive monomer and the further adhesive monomer comprise the same functional groups. Preferably, the curing agent reacts with both the functional group of the adhesive monomer and the functional group of the further adhesive monomer during the curing reaction. Preferably, a weight percentage of the adhesive monomer is 0,5 - 1,5 times a weight percentage of the further adhesive monomer. Preferably, the further adhesive monomer affects both the viscosity of the adhesive in the non-polymerized state as well as the tensile lap-shear strength of the adhesive in the cured state without affecting the change in viscosity between the non-polymerized state and the polymerized state.

Preferably, an equivalent weight of the functional group of the adhesive monomer is 0,5 - 2 times, especially preferably 0,75 - 1,5 times an equivalent weight of the cyclic anhydride group, the equivalent weights referring to the entire adhesive. Since, theoretically, the opened cyclic anhydride groups are able to react with both the functional group of the adhesive monomer and the functional group of the further adhesive monomer, adding the further adhesive monomer should have an impact on the polymerization reaction, requiring higher amounts of the polymerization agent, which would then require higher amounts of the polymerization accelerator, which would not be feasible while maintaining the weight ratio between the curing agent and the polymerization accelerator. Surprisingly, tests have shown that this is not the case, which could be due to the reaction of the opened cyclic anhydride groups with the functional group of the adhesive monomer having a higher reaction speed than the reaction of the opened cyclic anhydride groups with the functional group of the further adhesive monomer. This allows for adding further adhesive monomers without changing the weight ratio between the adhesive monomer and the polymerization agent, thereby keeping the weight ratio between the curing agent and the polymerization accelerator in the desired range.

In a further embodiment of the invention, the further adhesive monomer comprises at least one epoxy group in the non-cured state. Especially preferably, the epoxy group is the functional group of the further adhesive monomer. The further adhesive monomer may comprise any number and any type of epoxy groups. Preferably, in the non-cured state, the adhesive monomer comprises at least one aromatic epoxy group and the further adhesive monomer comprises at least one cycloaliphatic epoxy group.

In a further embodiment of the invention, the adhesive comprises 0,5 - 5 wt%, preferably 1 - 4 wt%, especially preferably 1,5 - 3 wt% of at least one thixotropic agent. A thixotropic agent is to be understood as a substance increasing the viscosity of a mixture it is added to by comprising a multitude of microscopic branches or fibers which then interlock and/or agglomerate. Examples of thixotropic agents used for adhesive can be found among fumed silicas, precipitated silicas, talcs or chalks. The thixotropic agent is part of the additives and contributes to the weight percentage of additives present in the adhesive.

In the following, examples of adhesives according to the invention are described.

The substances constituting the adhesives are listed in the following table:

**Table 1: Substances used**

| Substance | Function |
|---|---|
| Bisphenol-based epoxy resin | Adhesive monomer |
| ECC-based epoxy resin | Further adhesive monomer |
| Cyclic anhydride | Polymerization agent |
| Sulfonium salt | Curing agent |
| Non-heterocyclic tertiary amine | Polymerization accelerator |
| Fumed silica | Non-filler additive, thixotropic agent |
| Dye | Non-filler additive |

The following table shows the weight percentages for the adhesive as well as relevant relations and sums. Relation 1 refers to the weight percentage of the curing agent divided by the weight percentage of the polymerization accelerator. Relation 2 refers to the weight percentage of the adhesive monomer divided by the weight percentage of the polymerization agent. Sum refers to the sum of the weight percentage of the adhesive monomer and the weight percentage of the polymerization agent.

**Table 2: Weight percentages, relations and sums**

| | Adhesive 1 | Adhesive 2 | Adhesive 3 |
|---|---|---|---|
| Adhesive monomer | 37,5 wt% | 43 wt% | 33,30 wt% |
| Further adhesive monomer | 31,74 wt% | 31,74 wt% | 31,74 wt% |
| Polymerization agent | 22,5 wt% | 17 wt% | 26,70 wt% |
| Curing agent | 6 wt% | 6 wt% | 6 wt% |
| Polymerization accelerator | 0,2 wt% | 0,2 wt% | 0,2 wt% |
| Thixotropic agent | 2,03 wt% | 2,03 wt% | 2,03 wt% |
| Dye | 0,03 wt% | 0,03 wt% | 0,03 wt% |
| Relation 1 | 30 | 30 | 30 |
| Relation 2 | 1,6 | 2,5 | 1,25 |
| Sum | 60 | 60 | 60 |

Adhesives 1, 2 and 3 have a viscosity within 2 - 10 Pas in the non-polymerized state.

Adhesives 1, 2 and 3 have a polymerization temperature within 130 - 140°C. Adhesive 1 has a tensile lap-shear strength within 0,2 - 0,8 MPa in a polymerized state and within 10 - 20 MPa in a cured state. Adhesive 2 has a tensile lap-shear strength below 0,2 MPa in the polymerized state and forms a pressure-sensitive adhesive film with low cohesion. Adhesive 3 has a tensile lap-shear strength above 0,8 MPa in the polymerized state and forms a pressure-sensitive adhesive film with low adhesion. Due to these issues, the tensile lap-shear strength of adhesives 2 and 3 in the cured state were not measured.

Samples for the measurements were prepared as disclosed previously. The measurements of the viscosity, polymerization temperature and tensile lap-shear strength were performed as disclosed previously.

These examples show how even a small change in the weight ratio of the adhesive monomer and the polymerization agent can have a big impact on the performance of the adhesive in the polymerized state. While adhesives 1, 2 and 3 are all examples of adhesives that can be successfully coated without solvents, polymerized using heat and cured using UV light, there is only a very narrow range of possible adhesive compositions which yield adhesives with ideal properties in the non-polymerized state, polymerized state and cured state.

## Claims

1. An adhesive, comprising:
at least one adhesive monomer, the adhesive monomer comprising at least one hydroxy group in a non-polymerized state,
at least one polymerization agent which is heat-activatable,
at least one polymerization accelerator, and
at least one curing agent which is UV-activatable,
the polymerization agent comprising at least one cyclic anhydride group in the non-polymerized state, wherein a weight percentage of the curing agent is 10 - 50 times a weight percentage of the polymerization accelerator, the weight percentages relating to the entire adhesive without fillers.

2. The adhesive according to claim 1, having a viscosity of 1 - 30 Pas in the non-polymerized state, the viscosity being measured according to the method disclosed in the description.

3. The adhesive according to claim 1 or 2, having a polymerization temperature of 120 - 150°C, the polymerization temperature being measured according to the method disclosed in the description.

4. The adhesive according to any of the preceding claims, having a tensile lap-shear strength of 0,05 - 1 MPa in a polymerized state, the tensile lap-shear strength being measured according to the method disclosed in the description.

5. The adhesive according to any of the preceding claims, having a tensile lap-shear strength of 1 - 30 MPa in a cured state, the tensile lap-shear strength being measured according to the method disclosed in the description.

6. The adhesive according to any of the preceding claims, wherein the adhesive monomer comprises at least one epoxy group in a non-cured state.

7. The adhesive according to any of the preceding claims, wherein the polymerization accelerator comprises at least one amine group in the non-polymerized state.

8. The adhesive according to claim 7, wherein the amine group is a non-heterocyclic tertiary amine group.

9. The adhesive according to any of the preceding claims, wherein a weight percentage of the adhesive monomer is 0,5 - 3,5 times the weight percentage of the polymerization agent.

10. The adhesive according to any of the preceding claims, wherein a sum of the weight percentages of the adhesive monomer and the polymerization agent is 20 - 80 wt%.

11. The adhesive according to any of the preceding claims, comprising:
15 - 65 wt% of the adhesive monomer,
5 - 40 wt% of the polymerization agent,
2 - 8 wt% of the curing agent,
0,01 - 0,5 wt% of the polymerization accelerator and
0 - 30 wt% of additives.

12. The adhesive according to any of the preceding claims, comprising 10 - 60 wt% of at least one further adhesive monomer, the further adhesive monomer being free of hydroxy groups.

13. The adhesive according to claim 12, wherein the further adhesive monomer comprises at least one epoxy group in the non-cured state.

14. The adhesive according to any of the preceding claims, comprising 0,5 - 5 wt% of at least one thixotropic agent.

## Patentansprüche

1. Ein Klebstoff aufweisend:
zumindest ein Klebstoff-Monomer, welches in einem nicht-polymerisierten Zustand zumindest eine Hydroxy-Gruppe aufweist,
zumindest ein hitze-aktivierbarer Polymerisations-Initiator,
zumindest ein Polymerisationsbeschleuniger, und
zumindest ein UV-aktivierbarer Vernetzer,
wobei der Polymerisations-Initiator in dem nicht-polymerisierten Zustand zumindest eine zyklische Anhydrid-Gruppe aufweist, und wobei ein Gewichtsprozent des Vernetzers dem 10- bis 50-fachen eines Gewichtsprozents des Polymerisationsbeschleunigers entspricht, beide Gewichtsprozente beziehen sich auf den gesamten Klebstoff ohne Füllstoffe.

2. Der Klebstoff gemäß Anspruch 1, aufweisend eine Viskosität von 1 - 30 Pas im nicht-polymerisierten Zustand, wobei die Viskosität anhand dem in der Beschreibung offenbarten Verfahren ermittelt wird.

3. Der Klebstoff gemäß Anspruch 1 oder 2, aufweisend eine Polymerisations-Temperatur von 120 - 150°C, wobei die Polymerisations-Temperatur anhand dem in der Beschreibung offenbarten Verfahren ermittelt wird.

4. Der Klebstoff gemäß einem der vorhergehenden Ansprüche, aufweisend eine Scherfestigkeit von 0,05 - 1 MPa in einem polymerisierten Zustand, wobei die Scherfestigkeit anhand dem in der Beschreibung offenbarten Verfahren ermittelt wird.

5. Der Klebstoff gemäß einem der vorhergehenden Ansprüche, aufweisend eine Scherfestigkeit von 1 - 30 MPa in einem vernetzten Zustand, wobei die Scherfestigkeit anhand dem in der Beschreibung offenbarten Verfahren ermittelt wird.

6. Der Klebstoff gemäß einem der vorhergehenden Ansprüche, wobei das Klebstoff-Monomer in einem nicht-vernetzten Zustand zumindest eine Epoxid-Gruppe aufweist.

7. Der Klebstoff gemäß einem der vorhergehenden Ansprüche, wobei der Polymerisationsbeschleuniger im nicht-polymerisierten Zustand zumindest eine Amin-Gruppe aufweist.

8. Der Klebstoff gemäß Anspruch 7, wobei die Amin-Gruppe eine nicht-heterozyklische, tertiäre Amin-Gruppe ist.

9. Der Klebstoff gemäß einem der vorhergehenden Ansprüche, wobei ein Gewichtsprozent des Klebstoff-Monomers dem 0,5- bis 3,5-fachen des Gewichtsprozents des Polymerisations-Initiators entspricht.

10. Der Klebstoff gemäß einem der vorhergehenden Ansprüche, wobei eine Summe der Gewichtsprozente des Klebstoff-Monomers und des Polymerisations-Initiators im Bereich von 20 - 80 Gew% liegt.

11. Der Klebstoff gemäß einem der vorhergehenden Ansprüche, aufweisend:
15 - 65 Gew% des Klebstoff-Monomers,
5 - 40 Gew% des Polymerisations-Initiators,
2 - 8 Gew% des Vernetzers,
0,01 - 0,5 Gew% des Polymerisationsbeschleunigers und
0 - 30 Gew% von Additiven.

12. Der Klebstoff gemäß einem der vorhergehenden Ansprüche, aufweisend 10 - 60 Gew% zumindest eines weiteren Klebstoff-Monomers welches frei von Hydroxy-Gruppen ist.

13. Der Klebstoff gemäß Anspruch 12, wobei das weitere Klebstoff-Monomer im nicht-vernetzten Zustand zumindest eine Epoxid-Gruppe aufweist.

14. Der Klebstoff gemäß einem der vorhergehenden Ansprüche, aufweisend 0,5 - 5 Gew% von zumindest einem Thixotropiermittel.

## Revendications

1. Adhésif comprenant :
au moins un monomère adhésif, le monomère adhésif comprenant au moins un groupe hydroxy à l'état non polymérisé,
au moins un agent de polymérisation thermiquement activable,
au moins un accélérateur de polymérisation, et
au moins un agent de durcissement activable par rayonnement UV,
l'agent de polymérisation comprenant au moins un groupe anhydride cyclique à l'état non polymérisé, dans lequel un pourcentage en poids de l'agent de durcissement est égal à de 10 à 50 fois un pourcentage en poids de l'accélérateur de polymérisation, les pourcentages en poids se rapportant à l'adhésif total sans charges.

2. Adhésif selon la revendication 1, présentant une viscosité de 1 à 30 Pas à l'état non polymérisé, la viscosité étant mesurée selon la méthode divulguée dans la description.

3. Adhésif selon la revendication 1 ou 2, présentant une température de polymérisation de 120 à 150°C, la température de polymérisation étant mesurée selon la méthode divulguée dans la description.

4. Adhésif selon l'une quelconque des revendications précédentes, présentant une résistance au cisaillement par traction de 0,05 à 1 MPa à l'état polymérisé, la résistance au cisaillement par traction étant mesurée selon la méthode divulguée dans la description.

5. Adhésif selon l'une quelconque des revendications précédentes, présentant une résistance au cisaillement par traction de 1 à 30 MPa à l'état durci, la résistance au cisaillement par traction étant mesurée selon la méthode divulguée dans la description.

6. Adhésif selon l'une quelconque des revendications précédentes, dans lequel le monomère adhésif comprend au moins un groupe époxy à l'état non durci.

7. Adhésif selon l'une quelconque des revendications précédentes, dans lequel l'accélérateur de polymérisation comprend au moins un groupe amine à l'état non polymérisé.

8. Adhésif selon la revendication 7, dans lequel le groupe amine est un groupe amine tertiaire non hétérocyclique.

9. Adhésif selon l'une quelconque des revendications précédentes, dans lequel un pourcentage en poids du monomère adhésif est égal à de 0,5 à 3,5 fois le pourcentage en poids de l'agent de polymérisation.

10. Adhésif selon l'une quelconque des revendications précédentes, dans lequel la somme des pourcentages en poids du monomère adhésif et de l'agent de polymérisation est de 20 à 80 % en poids.

11. Adhésif selon l'une quelconque des revendications précédentes, comprenant:
15 à 65 % en poids du monomère adhésif,
5 à 40 % en poids de l'agent de polymérisation,
2 à 8 % en poids de l'agent de durcissement,
0,01 à 0,5 % en poids de l'accélérateur de polymérisation et
0 à 30 % en poids d'additifs.

12. Adhésif selon l'une quelconque des revendications précédentes, comprenant de10 à 60 % en poids d'au moins un autre monomère adhésif, l'autre monomère adhésif étant exempt de groupes hydroxy.

13. Adhésif selon la revendication 12, dans lequel l'autre monomère adhésif comprend au moins un groupe époxy à l'état non durci.

14. Adhésif selon l'une quelconque des revendications précédentes, comprenant de 0,5 à 5 % en poids d'au moins un agent thixotrope.
